# EUROPÄISCHE PATENTSCHRIFT

(11) **EP 2 381 140 B1**
(45) Veröffentlichungstag und Bekanntmachung des Hinweises auf die Patenterteilung: **22.08.2012**
(21) Anmeldenummer: 11156606.3
(22) Anmeldetag: 02.03.2011
(51) Int. Cl.: F16H 61/02, F16H 61/14, F16H 45/02

(54) **Verfahren zur Schaltsteuerung eines automatisierten Schaltgetriebes**
Method for controlling the shifting of an automated transmission
Procédé de commande de changement de vitesse d'une boîte de vitesse automatisée

(30) Priorität: 22.04.2010 DE 102010028076
(43) Veröffentlichungstag der Anmeldung: 26.10.2011
(73) Patentinhaber: ZF Friedrichshafen AG, 88038 Friedrichshafen (DE)
(72) Erfinder: Schneider, Florian, 88161, Lindenberg (DE); Mair, Roland, 88069, Tettnang (DE)

(56) Entgegenhaltungen:
- DE-A1- 10 045 337
- DE-A1-102004 059 733
- DE-A1-102004 059 744
- DE-U- 6 915 757

## Beschreibung

Die Erfindung betrifft ein Verfahren zur Schaltsteuerung eines automatisierten Schaltgetriebes gemäß dem Oberbegriff des Patentanspruchs 1, wie beschrieben in der DE 100 45 337A1.

In Kraftfahrzeugen kommen immer häufiger automatisierte Schaltgetriebe zur Anwendung, bei denen die Gangwahl, die Auslösung von Schaltvorgängen und das Ein- und Auslegen der Gänge automatisiert, d.h. durch die Auswertung von Betriebsparametern in einem Getriebesteuergerät und die Ansteuerung zugeordneter Stellantriebe, erfolgen. Häufig besteht bei derartigen Schaltgetrieben zudem die Möglichkeit, dass der Fahrer Schaltungen auch manuell auslösen kann, wobei diese üblicherweise auf ihre Zulässigkeit überprüft und nur bei Einhaltung vorgegebener Betriebsgrenzen, wie z.B. vorgegebenen Mindest- und Höchstdrehzahlen des Antriebsmotors, ausgeführt werden.

Vorliegend wird von einer an sich bekannten Getriebebauart ausgegangen, bei der Schaltungen im Unterschied zu so genannten Lastschaltgetrieben, wie Planeten-Automatgetrieben und Doppelkupplungsgetrieben, mit einer Zug- bzw. Schubkraftunterbrechung verbunden sind. Derartige Schaltgetriebe sind zumeist in Vorgelegebauweise ausgeführt und weisen eine einzige Eingangswelle auf, die üblicherweise über eine automatisierte Reibungskupplung, wie z.B. eine passiv schließbare Ein- oder Mehrscheiben-Trockenkupplung oder eine aktiv schließbare Lamellenkupplung, mit der Triebwelle des Antriebsmotors verbindbar bzw. von dieser trennbar ist.

Eine derartige Reibungskupplung dient sowohl als Anfahrelement als auch als Schaltkupplung. Als Anfahrelement überbrückt die Reibungskupplung bei Anfahrvorgängen im Schlupfbetrieb die Drehzahldifferenz zwischen der Triebwelle des Antriebsmotors und der Eingangswelle des Schaltgetriebes. Dasselbe gilt für ein Rangieren, Kriechen und Fahren mit niedriger Geschwindigkeit, wenn hierzu kein entsprechend hoch übersetzter Kriechgang zur Verfügung steht. Als Schaltkupplung wird die Reibungskupplung zu Beginn eines Schaltvorgangs vollständig geöffnet, um das lastfreie Auslegen des eingelegten Lastgangs und das lastfreie Synchronisieren und Einlegen des Zielgangs zu ermöglichen, und nachfolgend wieder vollständig geschlossen.

Da der mechanische Verschleiß und die thermische Belastung einer Reibungskupplung im Schlupfbetrieb mit zunehmender Fahrzeugmässe und bei erhöhter Zuglast des Antriebsmotors stark ansteigen, stehen für schwere Nutzfahrzeuge verschiedene Bauarten hydrodynamischer Anfahrelemente zur Verfügung, die ein weitgehend verschleißfreies Anfahren und Rangieren ermöglichen.

Die Offenlegungsschriften DE 10 2004 059 733 A1 und DE 10 2004 059 744 A1 offenbaren eine Getriebebaueinheit mit einem Anfahrelement in Form einer hydrodynamischen Komponente, mit einer dem Anfahrelement zugeordneten Einrichtung zur Überbrückung des Anfahrelementes und mit einem Wechselgetriebe umfassend mindestens eine eine Gangstufe bildende Drehzahl-/Drehmomentwandlungseinrichtung. Die Einrichtung zur Überbrückung umfasst eine Überbrückungsschaltung zur wahlweisen Leistungsübertragung über zwei Leistungszweige - einen ersten hydrodynamischen Leistungszweig und einen zweiten mechanischen Leistungszweig zwischen dem Getriebeeingang und dem Eingang des Wechselgetriebes. Die Überbrückungsschaltung umfasst zwei Drehzahl-/Drehmomentwandlungseinrichtungen. Gemäß der DE 10 2004 059 733 A1 sind wenigstens eine der Drehzahl-/Drehmomentwandlungseinrichtungen der Überbrückungsschaltung und/oder zumindest ein Element der Gangstufen bildenden Drehzahl-/Drehmomentwandlungseiniichtungen in unterschiedliche Leistungsübertragungszweige zwischen Getriebeeingang und Getriebeausgang integrierbar bzw. schaltbar. Die Getriebebaueinheit gemäß der DE 10 2004 059 744 A1 hingegen offenbart Mittel zur wahlweisen Unterbrechung oder Gewährleistung der Leistungsübertragung über die einzelnen Leistungszweige. Die Mittel umfassen zur wahlweisen Unterbrechung oder Gewährleistung der Leistungsübertragung über die einzelnen Leistungszweige einen im hydrodynamischen Leistungszweig zwischen Sekundärrad und Wechselgetriebe angeordneten Freilauf.

Während bei Stadtbussen häufig Planeten-Automatgetriebe in Verbindung mit einem vorgeschalteten hydrodynamischen Drehmomentwandler, wie z.B. der Ecomat® der ZF Friedrichshafen AG, zum Einsatz kommen, ist für besonders schwere Nutzfahrzeuge, wie z.B. Kranfahrzeuge und Schwerlastzugmaschinen, unter anderem die Kombinationen eines automatisierten Schaltgetriebes mit einer vorgeschalteten Wandlerschaltkupplung vorgesehen, wie z.B. beim TC-Tronic®-Getriebe der ZF Friedrichshafen AG.

Bei einer Wandlerschaltkupplung handelt es sich um einen mit einer Überbrückungskupplung versehenen hydrodynamischen Drehmomentwandler und eine diesem antriebstechnisch nachgeordnete Trennkupplung, bei welcher der Drehmomentwandler bei geöffneter Überbrückungskupplung und geschlossener Trennkupplung als Anfahrelement und die Trennkupplung bei geschlossener Überbrückungskupplüng als Schaltkupplung dienen. Bei Bedarf einer verschleißfreien Dauerbremse ist bei den vorgenannten Antriebssträngen die Anordnung eines separaten Retarders erForderlich, was weniger vorteilhaft mit einem erhöhten Bauraumbedarf und Gewicht des Antriebsstrangs verbunden ist.

Dagegen ist mit dem "VIAB" (Verschleißfreies Integriertes Anfahr- und Bremselement) der Voith Turbo AG eine Bauart eines hydrodynamischen Anfahrelementes mit integriertem Retarder bekannt, das allgemein als hydrodynamisches Anfahr- und Bremselement bezeichnet werden kann. Es handelt sich dabei um eine mit einer Überbrückungskupplung versehene hydrodynamische Kupplung, deren Turbinenrad über eine Freilaufkupplung mit einer mit der Eingangswelle eines nachgeschalteten Schaltgetriebes verbundenen Zwischenwelle verbindbar und über eine Turbinenbremse gegenüber einem Gehäuse abbremsbar ist.

Bei diesem Anfahr- und Bremselement, dessen schematischer Aufbau z.B. in der DE 100 45 337 A1 anhand der dortigen Fig. 2 beschrieben ist, dient die hydrodynamische Kupplung bei geöffneter Überbrückungskupplung und geöffneter Turbinenbremse als Anfahrelement, und bei geschlossener Überbrückungskupplung und geschlossener Turbinenbremse und demzufolge festgebremstem sowie über die entsperrte Freilaufkupplung von der Zwischenwelle entkoppelten Turbinenrad als Retarder. Das zwischen dem Pumpenrad und dem Turbinenrad übertragene Antriebs- oder Bremsmoment ist über den Füllungsgrad, d.h. die in dem das Pumpenrad und das Turbinenrad aufnehmenden Torusraum enthaltene Fluidmenge, regelbar.

Bei einem dem vorgenannten "VIAB" ähnlichen hydrodynamischen Anfahr- und Bremselement, das in der DE 69 15 757 U1 anhand der dortigen Fig. 2 und in der DE 100 45 337 A1 anhand der dortigen Fig. 5b beschrieben ist, wird anstelle der hydrodynamischen Kupplung ein hydrodynamischer Drehmomentwandler verwendet. Bei diesem bekannten Anfahr- und Bremselement dient der Drehmomentwandler bei geöffneter Überbrückungskupplung sowie geöffneter Turbinenbremse als Anfahrelement, und bei geschlossener Überbrückungskupplung sowie geschlossener Turbinenbremse als Retarder. Das zwischen dem Pumpenrad und dem Turbinenrad übertragene Drehmoment kann über den Füllungsgrad und gegebenenfalls auch über eine Verstellung der Schaufeln des zwischen dem Pumpenrad und dem Turbinenrad angeordneten Umlenkrades geregelt werden. Gegenüber einer hydrodynamischen Kupplung weist der hydrodynamische Drehmomentwandler bei hoher Drehzahldifferenz zwischen dem Pumpenrad und dem Turbinenrad, d.h. insbesondere bei Fahrzeugstillstand, eine Drehmomentüberhöhung von bis zu 2,5 auf, wodurch auch bei einem schwächeren Antriebsmotor eine relativ hohe Anfahrsteigfähigkeit und Anfahrbeschleunigung verfügbar ist.

Insbesondere bei Nutzfahrzeugen sind die Antriebsmotoren üblicherweise als turboaufgeladene Dieselmotoren ausgebildet, die eine spezielle Lastaufbaucharakteristik aufweisen. So kann ein turboaufgeladener Verbrennungsmotor unter Last spontan, d.h. mit hohem Drehmomentgradienten, nur ein unterhalb des Volllastmomentes liegendes Saugmoment erreichen. Eine weitere Erhöhung des Motormomentes ist, wenn auch mit geringerem Drehmomentgradienten, kurzfristig nur oberhalb der Ladegrenzdrehzahl möglich, ab welcher der Turbolader eine deutliche Erhöhung des Ladedrucks und damit des Motormomentes bewirkt. Aufgrund der Begrenzung des unter Last spontan erreichbaren Motormomentes auf das Saugmoment ist bei turboaufgeladenen Verbrennungsmotoren unterhalb der Ladegrenzdrehzahl somit eine deutliche, allgemein als Turboloch bezeichnete Durchzugsschwäche zu verzeichnen, die sich besonders dann bemerkbar macht, wenn die durch die Auslenkung des Fahrpedals gegebene Leistungsanforderung des Fahrers einem über dem Saugmoment liegenden Motormoment entspricht.

Zur Vermeidung oder zumindest Abschwächung des unerwünschten Turbolochs sind zwar mehrere Lösungen bekannt geworden, wie z.B. eine verstellbare Turbinenschaufelgeometrie zur Verbesserung des Ansprechverhaltens des Abgasturboladers, oder Zusatzeinrichtungen zur Erhöhung des Ladedruckes bei niedriger Motordrehzahl, wie ein mechanisch antreibbarer Kompressor, ein elektrisch antreibbarer Zusatzverdichter, oder ein mechanischer oder elektrischer Antrieb der Triebwelle des Abgasturboladers. Derartige Einrichtungen sind jedoch relativ aufwendig und teuer, erhöhen den Bauraumbedarf und stellen ein erhöhtes Störungspotential für den Betrieb des Verbrennungsmotors dar, so dass häufig darauf verzichtet wird.

Bei einer Kombination eines automatisierten Schaltgetriebes mit einem der beiden vorgenannten Bauarten eines hydrodynamischen Anfahr- und Bremselementes erfolgt der Lastabbau zu Beginn einer Zugschaltung, definiert als Zughochschaltung oder Zugrückschaltung mit dem die Eingangswelle des Schaltgetriebes während der Schaltung weitgehend drehmomentfrei gemacht wird, üblicherweise durch eine Reduzierung des von dem Verbrennungsmotor erzeugten Motormomentes und/oder durch ein Öffnen der Überbrückungskupplung und/oder durch eine Reduzierung des von dem hydrodynamischen Anfahr-und Bremselement übertragenen Drehmomentes.

Mit dem Lastabbau und während der nachfolgenden Zugkraftunterbrechung kann die Motordrehzahl des Antriebsmotors unter die Ladegrenzdrehzahl fallen. Demzufolge kommt es zu einem starken Absinken der Drehzahl des Turboladers und damit des Ladedrucks des Verbrennungsmotors, wodurch das Motormoment beim Lastaufbau am Ende der Schaltung nicht mehr spontan auf das Niveau vor der Schaltung erhöht werden kann. Die Folge ist eine entsprechende Durchzugsschwäche des Antriebsmotors, die zu einer unerwünschten Verzögerung des Kraftfahrzeugs führt und gegebenenfalls eine Rückschaltung erforderlich machen kann.

Der vorliegenden Erfindung liegt daher die Aufgabe zugrunde, ein Verfahren zur Schaltsteuerung eines automatisierten Schaltgetriebes mit einem vorgeschalteten hydrodynamischen Anfahr- und Bremselement der eingangs genannten Art vorzuschlagen, mit dem bei einer Zugschaltung, definiert als Zughochschaltung oder Zugrückschaltung das Auftreten einer Durchzugsschwäche des Antriebsmotors beim Lastaufbau am Ende der Zugschaltung vermieden werden kann.

Diese Aufgabe ist in Verbindung mit den Merkmalen des Oberbegriffs des Anspruchs 1 dadurch gelöst, dass der Lastabbau unter Aufrechterhaltung des von dem Antriebsmotor abgegebenen Motormomentes durch den Aufbau eines entsprechend hohen Widerstandsmomentes in dem hydrodynamischen Anfahr- und Bremselement erfolgt, indem die Turbinenbremse zu Beginn der Zugschaltung zumindest teilweise geschlossen und das von dem hydrodynamischen Anfahr- und Bremselement auf die Turbinenbremse übertragene Drehmoment M_{TB} auf das Motormoment M_{M} des Antriebsmotors eingestellt wird, definiert durch |M_{TB}|=|M_{M}|, und dass die Turbinenbremse zum Lastaufbau am Ende der Zugschaltung wieder geöffnet wird.

Vorteilhafte Ausgestaltungen und Weiterbildungen des erfindungsgemäßen Verfahrens sind Gegenstand der Unteransprüche.

Die Erfindung geht demnach von einem Kraftfahrzeug, insbesondere einem Nutzfahrzeug aus, dessen Antriebsstrang einen als turboaufgeladenen Verbrennungsmotor ausgebildeten Antriebsmotor und ein automatisiertes Schaltgetriebe aufweist, dessen Eingangswelle über ein spezielles Anfahrelement mit der Triebwelle des Antriebsmotors in Verbindung steht. Das Anfahrelement ist als ein mit einem Pumpenrad und einem Turbinenrad versehenes hydrodynamisches Anfahr- und Bremselement ausgebildet, dessen Pumpenrad über eine Überbrückungskupplung unmittelbar mit einer mit der Eingangswelle verbundenen Zwischenwelle verbindbar ist, und dessen Turbinenrad über eine Freilaufkupplung mit der Zwischenwelle verbindbar sowie über eine Turbinenbremse gegenüber einem Gehäuse abbremsbar ist. Die Basis des hydrodynamischen Anfahr- und Bremselementes kann sowohl durch eine hydrodynamische Kupplung als auch durch einen hydrodynamischen Drehmomentwandler gebildet sein.

Während einer Zugschaltung, d.h. einer Zughochschaltung oder einer Zugrückschaltung, wird die Eingangswelle des Schaltgetriebes durch einen zu Beginn der Schaltung erfolgenden Lastabbau weitgehend drehmomentfrei gehalten, damit der eingelegte Lastgang weitgehend lastfrei ausgelegt und der einzulegende Zielgang weitgehend lastfrei synchronisiert und eingelegt werden kann.

Üblicherweise erfolgt der Lastabbau bei geöffneter Turbinenbremse und geschlossener Überbrückungskupplung durch eine Reduzierung des von dem Antriebsmotor erzeugten Motormomentes und das Öffnen der Überbrückungskupplung, wodurch allerdings bei einer Zugschaltung beim Lastaufbau am Ende des Schaltungsablaufs die als Turboloch bekannte Durchzugsschwäche des Antriebsmotors auftreten kann. Um diesen unerwünschten Effekt zu vermeiden erfolgt der Lastabbau nach dem erfindungsgemäßen Verfahren unter Aufrechterhaltung des von dem Antriebsmotor abgegebenen Motormomentes M_{M} durch den Aufbau eines entsprechend hohen Widerstandsmomentes in dem hydrodynamischen Anfahr- und Bremselement.

Dazu wird die Turbinenbremse zu Beginn der Zugschaltung zumindest teilweise geschlossen und das von dem hydrodynamischen Anfahr- und Bremselement auf die Turbinenbremse übertragene Drehmoment M_{TB} auf das Motormoment M_{M} des Antriebsmotors eingestellt wird, definiert durch |M_{TB} =|M_{M}|. Hierdurch ist die Eingangswelle des Schaltgetriebes zur Durchführung der Zugschaltung weitgehend drehmomentfrei, so dass das Auslegen des eingelegten Lastgangs und das Synchronisieren sowie Einlegen des Zielgangs problemlos möglich ist. Zum Lastaufbau am Ende der Zugschaltung wird die Turbinenbremse dann wieder vollständig geöffnet.

Wenn die Turbinenbremse während des Schaltvorgangs vollständig geschlossen gehalten wird und damit das Turbinenrad gehäusefest arretiert ist, wird die von dem Antriebsmotor geleistete Arbeit von dem in dem Torusraum des hydrodynamischen Anfahr- und Bremselementes befindlichen Fluid aufgenommen, das dann hinreichend gekühlt werden muss. Wenn die Turbinenbremse während des Schaltvorgangs dagegen nur teilweise geschlossen gehalten wird und sich demzufolge im Schlupfbetrieb befindet, wird die von dem Antriebsmotor geleistete Arbeit größtenteils von der Turbinenbremse und nur zu einem geringen Teil von dem in dem Torusraum des hydrodynamischen Anfahr- und Bremselementes befindlichen Fluid aufgenommen. In diesem Fall muss die Turbinenbremse entsprechend verschleißfest ausgelegt sein und wirksam gekühlt werden.

Während des erfindungsgemäß gesteuerten Schaltungsablaufs kann die Überbrückungskupplung wahlweise geöffnet oder zumindest teilweise geschlossen gehalten werden, da das Drehmoment des Antriebsmotors durch das an der Turbinenbremse und in dem hydrodynamischen Anfahr- und Bremselement eingestellten Bremsmoment kompensiert wird.

Für den weiteren Ablauf der Zugschaltung zur Synchronisierung des Zielgangs kommen mehrere Verfahrensvarianten in Frage, die sich abhängig davon, ob es sich um eine Zughochschaltung oder um eine Zugrückschaltung handelt, und ob die Turbinenbremse während des Schaltungsablaufs vollständig oder nur teilweise geschlossen ist, voneinander unterscheiden. Weitere Unterschiede ergeben sich dann, wenn die Überbrückungskupplung während des Schaltungsablaufs geöffnet oder zumindest teilweise geschlossen gehalten wird.

Bei einer Zugrückschaltung kann vorgesehen sein, dass die Überbrückungskupplung zumindest teilweise geschlossen bleibt, und dass die Synchronisierung des Zielgangs durch eine Erhöhung der Motordrehzahl des Antriebsmotors erfolgt.

Bei zumindest teilweise geschlossener Überbrückungskupplung ist die Eingangswelle unmittelbar an die Triebwelle des Antriebsmotors gekoppelt, so dass die zur Synchronisierung des Zielgangs erforderliche Beschleunigung der Eingangswelle zweckmäßig über die im Rahmen der Drehzahlanpassung des Antriebsmotors erfolgende Erhöhung der Motordrehzahl erzeugt wird. Diese Vorgehensweise ist besonders bei einer unsynchronisierten Ausführung des Schaltgetriebes sinnvoll, jedoch auch bei einer synchronisierten Ausführung des Schaltgetriebes vorteilhaft, da eine Beschleunigung der Eingangswelle über die Reibsynchronisierung des Zielgangs zumeist einen anderen Drehzahlverlauf ergibt als der durch die Drehzahlanpassung des Antriebsmotors bewirkte Drehzahlverlauf. Bei einer getriebeinternen Synchronisierung der Eingangswelle würde die Reibsynchronisierung des Zielgangs daher teilweise gegen das Motordrehmoment und Trägheitsmoment des Antriebsmotors sowie des Turbinenrades arbeiten, was zu einem erhöhten Verschleiß und einer unnötigen Verzögerung der Synchronisierung führen würde.

Analog dazu kann bei einer Zughochschaltung vorgesehen sein, dass die Überbrückungskupplung zumindest teilweise geschlossen bleibt, und dass die Synchronisierung des Zielgangs durch eine Reduzierung der Motordrehzahl des Antriebsmotors erfolgt. Aufgrund der Reduzierung der Motordrehzahl ist die Eingangswelle des Schaltgetriebes durch die entsperrte Freilaufkupplung von dem Turbinenrad des hydrodynamischen Anfahr- und Schaltelementes entkoppelt, jedoch über die zumindest teilweise geschlossene Überbrückungskupplung an die Triebwelle des Antriebsmotors gekoppelt. Die zur Synchronisierung des Zielgangs erforderliche Verzögerung der Eingangswelle wird daher zweckmäßig ebenfalls über die im Rahmen der Drehzahlanpassung des Antriebsmotors erfolgende Reduzierung der Motordrehzahl erzeugt. Dies gilt gleichermaßen für unsynchronisierte als auch für synchronisierte Schaltgetriebe.

Bei einer Zugrückschaltung kann auch vorgesehen sein, dass die Überbrückungskupplung vollständig geöffnet wird, und dass die Synchronisierung des Zielgangs bei vollständig geschlossener Turbinenbremse durch eine getriebeinterne Synchronisiereinrichtung oder durch eine Erhöhung der Motordrehzahl des Antriebsmotors in Verbindung mit einem teilweisen Schließen der Überbrückungskupplung erfolgt.

Bei durch die vollständig geschlossene Turbinenbremse gehäusefest arretiertem Turbinenrad ist die Freilaufkupplung entsperrt und das Turbinenrad damit von der Eingangswelle des Schaltgetriebes entkoppelt. Die zur Synchronisierung des Zielgangs erforderliche Beschleunigung der Eingangswelle kann daher bei einem synchronisierten Schaltgetriebe wahlweise über die Reibsynchronisierung des Zielgangs oder durch die im Rahmen der Drehzahlanpassung des Antriebsmotors erfolgende Erhöhung der Motordrehzahl in Verbindung mit einem teilweisen Schließen der Überbrückungskupplung erfolgen. Bei einem unsynchronisierten Schaltgetriebe kann die Synchronisierung des Zielgangs dagegen nur über die Erhöhung der Motordrehzahl des Antriebsmotors erfolgen.

Alternativ dazu kann bei einer Zugrückschaltung jedoch auch vorgesehen sein, dass die Überbrückungskupplung vollständig geöffnet wird, und dass die Synchronisierung des Zielgangs bei teilweise geschlossener Turbinenbremse durch eine Erhöhung der Motordrehzahl des Antriebsmotors erfolgt. Mit der im Rahmen der Drehzahlanpassung des Antriebsmotors durchgeführten Erhöhung der Motordrehzahl wird auch das Turbinenrad beschleunigt und dieses damit durch das Sperren der Freilaufkupplung an die Eingangswelle des Schaltgetriebes angekoppelt. Die Beschleunigung der Eingangswelle durch den Antriebsmotor erfolgt in diesem Fall somit über das hydrodynamische Anfahr-und Bremselement.

Analog zu der zuvor beschriebenen Vorgehensweise bei einer Zugrückschaltung kann bei einer Zughochschaltung vorgesehen sein, dass die Überbrückungskupplung vollständig geöffnet wird, und dass die Synchronisierung des Zielgangs bei vollständig geschlossener Turbinenbremse und somit von der Eingangswelle entkoppeltem Turbinenrad durch eine getriebeinterne Synchronisiereinrichtung, d.h. durch die Reibsynchronisierung des Zielgangs bzw. durch eine Getriebebremse, oder durch eine Reduzierung der Motordrehzahl des Antriebsmotors in Verbindung mit einem teilweisen Schließen der Überbrückungskupplung erfolgt.

Alternativ dazu kann bei einer Zughochschaltung auch vorgesehen sein, dass die Überbrückungskupplung vollständig geöffnet wird, und dass die Synchronisierung des Zielgangs bei teilweise geschlossener Turbinenbremse durch eine getriebeinterne Synchronisiereinrichtung, d.h. durch die Reibsynchronisierung des Zielgangs oder durch eine Getriebebremse, unter Führung der Eingangswellendrehzahl n_{GE} oberhalb der Turbinenraddrehzahl n_{T}, definiert durch n_{GE} > n_{T}, oder durch eine Reduzierung der Motordrehzahl des Antriebsmotors in Verbindung mit einem teilweisen Schließen der Überbrückungskupplung erfolgt. Dabei wird bei der getriebeinternen Synchronisierung der Eingangswelle durch die entsprechende Führung der Eingangswellendrehzahl n_{GE}, definiert durch n_{GE} > n_{T}, ein durch das Sperren der Freilaufkupplung bewirktes Ankoppeln des Turbinenrades an die Eingangswelle und somit ein Arbeiten der getriebeinternen Synchronisiereinrichtung gegen das Motor- und Trägheitsmoment des Antriebsmotors und des Turbinenrades vermieden.

Bei den vorgenannten Schaltungsabläufen kann die Erhöhung der Motordrehzahl jeweils durch eine kurzzeitige Erhöhung des Motormomentes M_{M} des Antriebsmotors und/oder durch eine kurzzeitige Reduzierung des von dem hydrodynamischen Anfahr- und Bremselement, d.h. der hydrodynamischen Kupplung oder dem hydrodynamischen Drehmomentwandler, übertragenen Drehmomentes M_{TB} und/oder durch ein kurzzeitiges Öffnen bzw. weiteres Öffnen der Turbinenbremse bewirkt werden.

Die Reduzierung der Motordrehzahl kann dagegen jeweils durch eine kurzzeitige Verringerung des Motormomentes M_{M} des Antriebsmotors und/oder durch eine kurzzeitige Erhöhung des von dem hydrodynamischen Anfahr- und Bremselement, d.h. der hydrodynamischen Kupplung oder dem hydrodynamischen Drehmomentwandler, übertragenen Drehmomentes M_{TB} und bei teilweise geschlossener Turbinenbremse zusätzlich durch ein kurzzeitiges weiteres Schließen der Turbinenbremse bewirkt werden.

Zur Verdeutlichung der Erfindung ist der Beschreibung eine Zeichnung mit einem Ausführungsbeispiel beigefügt. In dieser zeigt
Fig. 1 einen erfindungsgemäßen Ablauf eines Lastabbaus und eines Lastaufbaus bei einer Zughochschaltung anhand des Drehzahlverlaufs der Eingangswelle eines automatisierten Schaltgetriebes und der Momentenverläufe des Antriebsmotors sowie der Turbinenbremse eines dem Schaltgetriebe vorgeschalteten hydrodynamischen Anfahr- und Bremselements,
Fig. 2 eine erste Bauart eines hydrodynamischen Anfahr- und Bremselements zur Anwendung des erfindungsgemäßen Verfahrens, und
Fig. 3 eine zweite Bauart eines hydrodynamischen Anfahr- und Bremselements zur Anwendung des erfindungsgemäßen Verfahrens.

Die vorliegende Erfindung geht aus von einem automatisierten Schaltgetriebe mit einer Eingangswelle 3, die über ein hydrodynamisches Anfahr- und Bremselement 2, 2' mit der Triebwelle 1 eines als turboaufgeladener Verbrennungsmotor ausgebildeten Antriebsmotors in Verbindung steht.

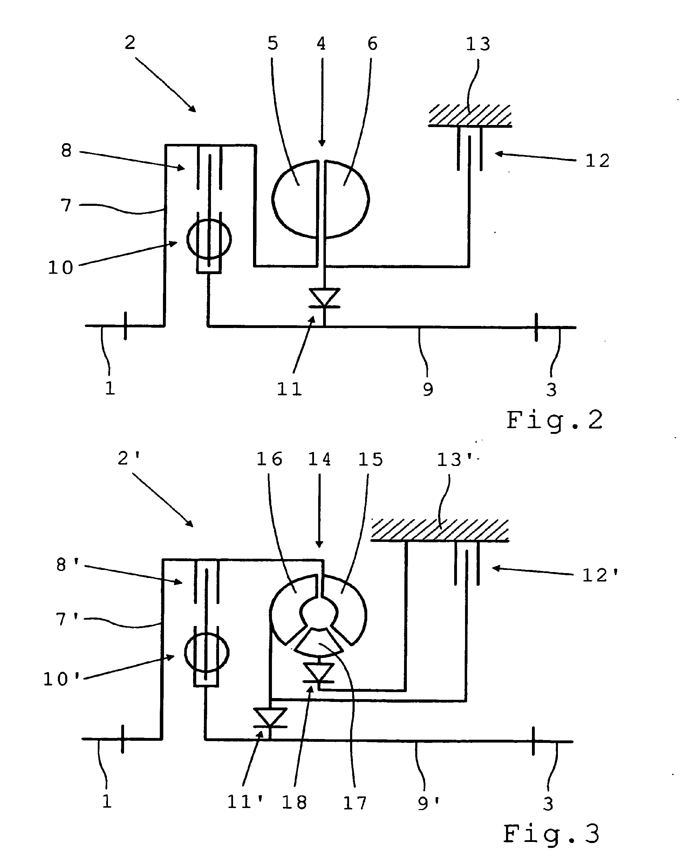

Gemäß einer ersten Ausführungsform nach Fig. 2 basiert das hydrodynamische Anfahr- und Bremselement 2 auf einer hydrodynamischen Kupplung 4, die ein Pumpenrad 5 und ein Turbinenrad 6 aufweist. Das Pumpenrad 5 ist über ein Eingangselement 7 drehfest mit der Triebwelle 1 des nicht näher dargestellten Antriebsmotors verbunden. Das Eingangselement 7 und damit sowohl die Triebwelle 1 des Antriebsmotors als auch das Pumpenrad 5 sind über eine Überbrückungskupplung 8 mit einer Zwischenwelle 9 verbindbar, die mit einem Drehschwingungsdämpfer 10 gekoppelt und drehfest mit der Eingangswelle 3 des nicht näher dargestellten Schaltgetriebes verbunden ist. Das Turbinenrad 6 ist über eine Freilaufkupplung 11 drehfest mit der Zwischenwelle 9 und damit mit der Eingangswelle 3 verbindbar. Die Freilaufkupplung 11 sperrt bei einer Drehmomentübertragung von dem Turbinenrad 6 in die Zwischenwelle 9 und entsperrt bei schneller drehender Zwischenwelle 9. Zudem ist das Turbinenrad 6 über eine Turbinenbremse 12 gegenüber einem Gehäuse 13 abbremsbar und arretierbar.

Gemäß einer zweiten Ausführungsform nach Fig. 3 basiert das hydrodynamische Anfahr- und Bremselement 2' auf einem hydrodynamischen Drehmomentwandler 14, der ein Pumpenrad 15, ein Turbinenrad 16 und ein zwischen dem Pumpenrad 15 und dem Turbinenrad 16 angeordnetes Umlenkrad 17 aufweist. Das Pumpenrad 15 ist über ein Eingangselement 7' drehfest mit der Triebwelle 1 des nicht näher dargestellten Antriebsmotors verbunden. Das Eingangselement 7' und damit sowohl die Triebwelle 1 des Antriebsmotors als auch das Pumpenrad 15 sind über eine Überbrückungskupplung 8' mit einer Zwischenwelle 9' verbindbar, die mit einem Drehschwingungsdämpfer 10' gekoppelt und drehfest mit der Eingangswelle 3 des nicht näher dargestellten Schaltgetriebes verbunden ist. Das Turbinenrad 16 ist über eine Freilaufkupplung 11' drehfest mit der Zwischenwelle 9' und damit mit der Eingangswelle verbindbar. Die Freilaufkupplung 11' sperrt bei einer Drehmomentübertragung von dem Turbinenrad 16 in die Zwischenwelle 9' und entsperrt bei schneller drehender Zwischenwelle 9'. Zudem ist das Turbinenrad 16 über eine Turbinenbremse 12' gegenüber einem Gehäuse 13' abbremsbar und arretierbar. Auch das Umlenkrad 17 ist über eine Freilaufkupplung 18 gegenüber dem Gehäuse 13' arretierbar. Die Freilaufkupplung 18 sperrt bei einer Drehung des Umlenkrades 17 entgegen der Drehrichtung der Triebwelle 1 und entsperrt bei einer Drehung des Umlenkrades 17 in Drehrichtung der Triebwelle 1.

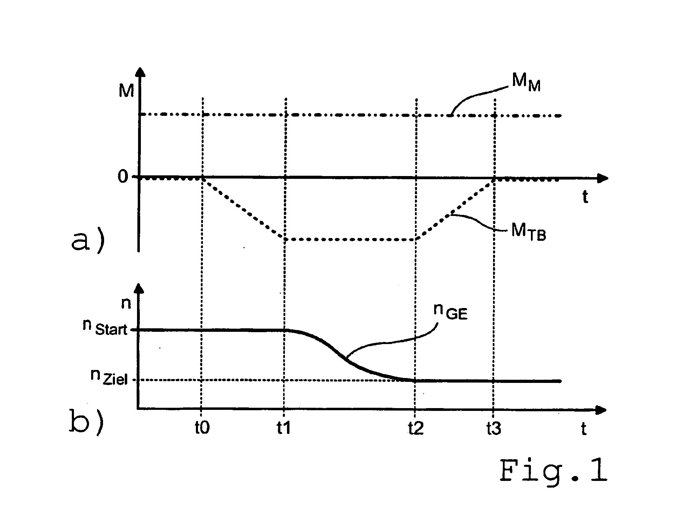

In dem Diagramm der Fig. 1 ist der erfindungsgemäße Verfahrensablauf eines schaltungsbedingten Lastabbaus und Lastaufbaus beispielhaft für eine Zughochschaltung veranschaulicht. Hierzu sind in Fig. 1 a die Zeitverläufe des von dem Antriebsmotor abgegebenen Motormomentes M_{M} und des von der hydrodynamischen Kupplung 4 oder dem hydrodynamischen Drehmomentwandler 14 übertragenen sowie von der Turbinenbremse 12, 12' aufgenommenen Bremsmomentes M_{TB} gezeigt, während in Fig. 1b der zeitliche Verlauf der Eingangswellendrehzahl n_{GE} des Schaltgetriebes dargestellt ist.

Mit der Ausgabe eines Schaltsignals zur Auslösung der Zughochschaltung zum Zeitpunkt t0 wird unter Aufrechterhaltung des von dem Antriebsmotor abgegebenen Motormomentes M_{M} die Turbinenbremse 12, 12' zumindest teilweise so weit geschlossen und bedarfsweise das von dem hydrodynamischen Anfahr- und Bremselement 2, 2' auf die Turbinenbremse 12, 12' übertragene Drehmoment M_{TB} entsprechend eingestellt, bis das Bremsmoment M_{TB} zum Zeitpunkt t1 den Betrag des Motormomentes M_{M} erreicht hat, definiert durch |M_{TB}|=|M_{M}|. Hierdurch ist die Eingangswelle 3 des Schaltgetriebes ab dem Zeitpunkt t1 nahezu drehmomentfrei, so dass nachfolgend der eingelegte Lastgang weitgehend lastfrei ausgelegt und der einzulegende Zielgang weitgehend lastfrei synchronisiert und eingelegt werden können, was zum Zeitpunkt t2 abgeschlossen ist.

Bei der Synchronisierung wird die Eingangswelle 3 des Schaltgetriebes zwischen den Zeitpunkten t1 und t2 durch eine getriebeinterne Synchronisiereinrichtung oder durch den Antriebsmotor von der Startdrehzahl n_{Start} zu Beginn der Zughochschaltung auf die Zieldrehzahl n_{Ziel} zum Einlegen des Zielgangs abgebremst. Der nachfolgende Lastaufbau erfolgt dadurch, dass die Turbinenbremse 12, 12' bis zum Zeitpunkt t3 wieder vollständig geöffnet wird. Hierdurch liegt ab dem Zeitpunkt t3 wieder das volle Motormoment M_{M} an der Eingangswelle 3 des Schaltgetriebes an.

Ein Einbruch des von dem Antriebsmotor unter Last spontan abgebbaren Motormomentes M_{M}, der bei einem turboaufgeladenen Verbrennungsmotor nach einer zum Lastabbau durchgeführten Reduzierung des abgegebenen Motormomentes M_{M} beim Lastaufbau auftreten kann, ist gemäß dem Verfahren nach der Erfindung zuverlässig verhindert.

### Bezugszeichen

- 1: Triebwelle
- 2, 2': Anfahr- und Bremselement
- 3: Eingangswelle
- 4: Kupplung
- 5: Pumpenrad
- 6: Turbinenrad
- 7, 7': Eingangselement
- 8, 8': Überbrückungskupplung
- 9, 9': Zwischenwelle
- 10, 10': Drehschwingungsdämpfer
- 11, 11': Freilaufkupplung
- 12, 12': Turbinenbremse
- 13, 13': Gehäuse
- 14: Drehmomentwandler
- 15: Pumpenrad
- 16: Turbinenrad
- 17: Umlenkrad
- 18: Freilaufkupplung
- M: Drehmoment
- M_{M}: Motormoment
- M_{TB}: Bremsmoment
- n: Drehzahl
- n_{GE}: Eingangswellendrehzahl
- n_{Start}: Startdrehzahl
- n_{T}: Turbinenraddrehzahl
- n_{ziel}: Zieldrehzahl
- t: Zeit
- t0: Zeitpunkt
- t1: Zeitpunkt
- t2: Zeitpunkt
- t3: Zeitpunkt

## Patentansprüche

1. Verfahren zur Schaltsteuerung eines automatisierten Schaltgetriebes, dem ein mit einem Pumpenrad (5, 15) und einem Turbinenrad (6, 16) versehenes hydrodynamisches Anfahr- und Bremselement (2, 2') vorgeschaltet ist, über das die Eingangswelle (3) des Schaltgetriebes mit der Triebwelle (1) eines als turboaufgeladener Verbrennungsmotor ausgebildeten Antriebsmotors in Verbindung steht, dessen Pumpenrad (5, 15) über eine Überbrückungskupplung (8, 8') unmittelbar mit einer mit der Eingangswelle (3) verbundenen Zwischenwelle (9, 9') verbindbar ist, und dessen Turbinenrad (6, 16) über eine Freilaufkupplung (11, 11') mit der Zwischenwelle (9, 9') verbindbar und über eine Turbinenbremse (12, 12') gegenüber einem Gehäuse (13, 13') abbremsbar ist, wobei während einer Zugschaltung, definiert als Zughochschaltung oder Zugrückschaltung die Eingangswelle (3) des Schaltgetriebes durch einen zu Beginn der Schaltung erfolgenden Lastabbau weitgehend drehmomentfrei gehalten wird, damit der eingelegte Lastgang weitgehend lastfrei ausgelegt und der einzulegende Zielgang weitgehend lastfrei synchronisiert und eingelegt werden kann, **dadurch gekennzeichnet, dass** der Lastabbau unter Aufrechterhaltung des von dem Antriebsmotor abgegebenen Motormomentes M_{M} durch den Aufbau eines entsprechend hohen Widerstandsmomentes M_{TB} in dem hydrodynamischen Anfahr- und Bremselement (2, 2') erfolgt, indem die Turbinenbremse (12, 12') zu Beginn der Zugschaltung zumindest teilweise geschlossen und das von dem hydrodynamischen Anfahr- und Bremselement (2, 2') auf die Turbinenbremse (12, 12') übertragene Drehmoment M_{TB} auf das Motormoment M_{M} des Antriebsmotors eingestellt wird |M_{TB}| = |M_{M} |, und dass die Turbinenbremse (12, 12') zum Lastaufbau am Ende der Zugschaltung wieder vollständig geöffnet wird.

2. Verfahren nach Anspruch 1, **dadurch gekennzeichnet, dass** bei einer Zugrückschaltung die Überbrückungskupplung (8, 8') zumindest teilweise geschlossen bleibt, und dass die Synchronisierung des Zielgangs durch eine Erhöhung der Motordrehzahl des Antriebsmotors erfolgt.

3. Verfahren nach Anspruch 1, **dadurch gekennzeichnet, dass** bei einer Zughochschaltung die Überbrückungskupplung (8, 8') zumindest teilweise geschlossen bleibt, und dass die Synchronisierung des Zielgangs durch eine Reduzierung der Motordrehzahl des Antriebsmotors erfolgt.

4. Verfahren nach Anspruch 1, **dadurch gekennzeichnet, dass** bei einer Zugrückschaltung die Überbrückungskupplung (8, 8') vollständig geöffnet wird, und dass die Synchronisierung des Zielgangs bei vollständig geschlossener Turbinenbremse (12, 12') durch eine getriebeinterne Synchronisiereinrichtung oder durch eine Erhöhung der Motordrehzahl des Antriebsmotors in Verbindung mit einem teilweisen Schließen der Überbrückungskupplung (8, 8') erfolgt.

5. Verfahren nach Anspruch 1, **dadurch gekennzeichnet, dass** bei einer Zugrückschaltung die Überbrückungskupplung (8, 8') vollständig geöffnet wird, und dass die Synchronisierung des Zielgangs bei teilweise geschlossener Turbinenbremse (12, 12') durch eine Erhöhung der Motordrehzahl des Antriebsmotors erfolgt.

6. Verfahren nach Anspruch 1, **dadurch gekennzeichnet, dass** bei einer Zughochschaltung die Überbrückungskupplung (8, 8') vollständig geöffnet wird, und dass die Synchronisierung des Zielgangs bei vollständig geschlossener Turbinenbremse (12, 12') durch eine getriebeinterne Synchronisiereinrichtung oder durch eine Reduzierung der Motordrehzahl des Antriebsmotors in Verbindung mit einem teilweisen Schließen der Überbrückungskupplung (8, 8') erfolgt.

7. Verfahren nach Anspruch 1, **dadurch gekennzeichnet, dass** bei einer Zughochschaltung die Überbrückungskupplung (8, 8') vollständig geöffnet wird, und dass die Synchronisierung des Zielgangs bei teilweise geschlossener Turbinenbremse (12, 12') durch eine getriebeinterne Synchronisiereinrichtung unter Führung der Eingangswellendrehzahl n_{GE} oberhalb der Turbinenraddrehzahl n_{T}, definiert n_{GE} > n_{T} oder durch eine Reduzierung der Motordrehzahl des Antriebsmotors in Verbindung mit einem teilweisen Schließen der Überbrückungskupplung (8, 8') erfolgt.

8. Verfahren nach einem der Ansprüche 2, 4 und 5, **dadurch gekennzeichnet, dass** die Erhöhung der Motordrehzahl durch eine kurzzeitige Erhöhung des Motormomentes M_{M} des Antriebsmotors und/oder durch eine kurzzeitige Reduzierung des von dem hydrodynamischen Anfahr- und Bremselement (2, 2') übertragenen Drehmomentes M_{TB} und/der durch ein kurzzeitiges Öffnen bzw. weiteres Öffnen der Turbinenbremse (12, 12') bewirkt wird.

9. Verfahren nach einem der Ansprüche 3, 6 und 7, **dadurch gekennzeichnet, dass** die Reduzierung der Motordrehzahl durch eine kurzzeitige Verringerung des Motormomentes M_{M} des Antriebsmotors und/oder durch eine kurzzeitige Erhöhung des von dem hydrodynamischen Anfahr- und Bremselement (2, 2') übertragenen Drehmomentes M_{TB} und bei teilweise geschlossener Turbinenbremse (12, 12') zusätzlich durch ein kurzzeitiges weiteres Schließen der Turbinenbremse (12, 12') bewirkt wird.

## Claims

1. Method for shift control of an automatic transmission, upstream of which there is provided a hydrodynamic starting and braking element (2, 2') which is provided with a pump wheel (5, 15) and a turbine wheel (6, 16) and via which the input shaft (3) of the transmission is connected to the driving shaft (1) of a drive engine which is formed as a turbo-charged combustion engine, the pump wheel (5, 15) of which hydrodynamic starting and braking element can be connected via a bridging clutch (8, 8') directly to an intermediate shaft (9, 9') connected to the input shaft (3), and the turbine wheel (6, 16) of which hydrodynamic starting and braking element can be connected to the intermediate shaft (9, 9') via an overrunning clutch (11, 11') and can be braked with respect to a housing (13, 13') via a turbine brake (12, 12'), wherein, during a traction shift, defined as a traction upshift or a traction downshift, the input shaft (3) of the transmission is kept largely free of torque by a reduction in load that takes place at the start of shifting, in order that the engaged load gear can be disengaged in a largely load-free manner and the target gear to be engaged can be synchronized and engaged in a largely load-free manner, **characterized in that** the reduction in load takes place with the engine torque M_{M} output by the drive engine being maintained by the reduction in a correspondingly high resistance torque M_{TB} in the hydrodynamic starting and braking element (2, 2'), by the turbine brake (12, 12') being at least partly closed at the start of the traction shift and the torque M_{TB} transmitted from the hydrodynamic starting and braking element (2, 2') to the turbine brake (12, 12') being attuned to the engine torque M_{M} of the drive engine, defined by |M_{TB}| = |M_{M}|, and **in that** the turbine brake (12, 12') is fully opened again at the end of the traction shift in order to build up load.

2. Method according to Claim 1, **characterized in that** in the case of a traction downshift, the bridging clutch (8, 8') remains at least partially closed, and **in that** the synchronization of the target gear takes place by an increase in the engine speed of the drive engine.

3. Method according to Claim 1, **characterized in that** in the case of a traction upshift, the bridging clutch (8, 8') remains at least partially closed, and **in that** the synchronization of the target gear takes place by a reduction in the engine speed of the drive engine.

4. Method according to Claim 1, **characterized in that** in the case of a traction downshift, the bridging clutch (8, 8') is opened fully, and **in that** the synchronization of the target gear takes place, with the turbine brake (12, 12') fully closed, by a transmission-internal synchronizing device or by an increase in the engine speed of the drive engine in conjunction with a partial closure of the bridging clutch (8, 8').

5. Method according to Claim 1, **characterized in that** in the case of a traction downshift, the bridging clutch (8, 8') is opened fully, and **in that** the synchronization of the target gear takes place, with the turbine brake (12, 12') partially closed, by an increase in the engine speed of the drive engine.

6. Method according to Claim 1, **characterized in that** in the case of a traction upshift, the bridging clutch (8, 8') is opened fully, and **in that** the synchronization of the target gear takes place, with the turbine brake (12, 12') fully closed, by a transmission-internal synchronizing device or by a reduction in the engine speed of the drive engine in conjunction with a partial closure of the bridging clutch (8, 8').

7. Method according to Claim 1, **characterized in that** in the case of a traction upshift, the bridging clutch (8, 8') is opened fully, and **in that** the synchronization of the target gear takes place, with the turbine brake (12, 12') partially closed, by a transmission-internal synchronizing device, with the input shaft speed n_{GE} being kept above the turbine wheel speed n_{T}, defined by n_{GE} > n_{T}, or by a reduction in the engine speed of the drive engine in conjunction with a partial closure of the bridging clutch (8, 8').

8. Method according to one of Claims 2, 4 and 5, **characterized in that** the increase in the engine speed is brought about by a brief increase in the engine torque M_{M} of the drive engine and/or by a brief reduction in the torque M_{TB} transmitted by the hydrodynamic starting and braking element (2, 2') and/or by briefly opening or further opening the turbine brake (12, 12').

9. Method according to one of Claims 3, 6 and 7, **characterized in that** the reduction in the engine speed is brought about by a brief decrease in the engine torque M_{M} of the drive engine and/or by a brief increase in the torque M_{TB} transmitted by the hydrodynamic starting and braking element (2, 2') and, with the turbine brake (12, 12') partially closed, additionally by briefly further closing the turbine brake (12, 12').

## Revendications

1. Procédé de commande de changement de vitesses d'une boîte de vitesses automatisée, en amont de laquelle est monté un élément de démarrage et de freinage hydrodynamique (2, 2') muni d'une roue de pompe (5, 15) et d'une roue de turbine (6, 16), par le biais duquel l'arbre d'entrée (3) de la boîte de vitesses est en liaison avec l'arbre moteur (1) d'un moteur d'entraînement réalisé sous forme de moteur à combustion interne à turbocompresseur, dont la roue de pompe (5, 15) peut être connectée par le biais d'un embrayage de pontage (8, 8') directement à un arbre intermédiaire (9, 9') connecté à l'arbre d'entrée (3), et dont la roue de turbine (6, 16) peut être connectée par le biais d'un embrayage à roue libre (11, 11') à l'arbre intermédiaire (9, 9') et peut être freinée par le biais d'un frein de turbine (12, 12') par rapport à un boîtier (13, 13'), dans lequel, pendant un changement de vitesse en traction, défini comme un passage à la vitesse supérieure en traction ou un rétrogradage en traction, l'arbre d'entrée (3) de la boîte de vitesses est maintenu essentiellement sans couple par une réduction de charge se produisant au début du changement de vitesse, afin que le rapport en charge enclenché soit conçu essentiellement sans charge et que le rapport cible à enclencher soit synchronisé essentiellement sans charge et puisse être enclenché, **caractérisé en ce que** la réduction de charge se produit en maintenant le couple moteur M_{M} fourni par le moteur d'entraînement en créant un couple résistant M_{TB} de même ampleur dans l'élément de démarrage et de freinage hydrodynamique (2, 2'), en fermant au moins partiellement le frein de turbine (12, 12') au début du changement de vitesse en traction et en ajustant le couple M_{TB} transmis par l'élément de démarrage et de freinage hydrodynamique (2, 2') au frein de turbine (12, 12') au couple moteur M_{M} du moteur d'entraînement, défini par |M_{TB}| = |M_{M}|, et **en ce que** le frein de turbine (12, 12') est à nouveau complètement ouvert pour l'augmentation de la charge à la fin du changement de vitesse en traction.

2. Procédé selon la revendication 1, **caractérisé en ce que** dans le cas d'un rétrogradage en traction, l'embrayage de pontage (8, 8') reste au moins en partie fermé, et **en ce que** la synchronisation du rapport cible s'effectue par une augmentation du régime du moteur d'entraînement.

3. Procédé selon la revendication 1, **caractérisé en ce que** dans le cas d'un passage à la vitesse supérieure en traction, l'embrayage de pontage (8, 8') reste au moins en partie fermé, et **en ce que** la synchronisation du rapport cible s'effectue par une réduction du régime du moteur d'entraînement.

4. Procédé selon la revendication 1, **caractérisé en ce que** dans le cas d'un rétrogradage en traction, l'embrayage de pontage (8, 8') est complètement ouvert, et **en ce que** la synchronisation du rapport cible est effectuée lorsque le frein de turbine (12, 12') est complètement fermé par un dispositif de synchronisation interne à la boîte de vitesses ou par une augmentation du régime du moteur d'entraînement en association avec une fermeture partielle de l'embrayage de pontage (8, 8').

5. Procédé selon la revendication 1, **caractérisé en ce que** dans le cas d'un rétrogradage en traction, l'embrayage de pontage (8, 8') est complètement ouvert, et **en ce que** la synchronisation du rapport cible, lorsque le frein de turbine (12, 12') est partiellement fermé, s'effectue par une augmentation du régime du moteur d'entraînement.

6. Procédé selon la revendication 1, **caractérisé en ce que** dans le cas d'un passage à la vitesse supérieure en traction, l'embrayage de pontage (8, 8') est complètement ouvert, et **en ce que** la synchronisation du rapport cible, lorsque le frein de turbine (12, 12') est complètement fermé, s'effectue par un dispositif de synchronisation interne à la boîte de vitesses ou par une réduction du régime du moteur d'entraînement en association avec une fermeture partielle de l'embrayage de pontage (8, 8').

7. Procédé selon la revendication 1, **caractérisé en ce que** dans le cas d'un passage à la vitesse supérieure en traction, l'embrayage de pontage (8, 8') est complètement ouvert, et **en ce que** la synchronisation du rapport cible, lorsque le frein de turbine (12, 12') est partiellement fermé, s'effectue par un dispositif de synchronisation interne à la boîte de vitesses avec guidage du régime de l'arbre d'entrée n_{GE} au-dessus du régime de la roue de turbine n_{T}, défini par n_{GE} > n_{T}, ou par une réduction du régime du moteur d'entraînement en association avec une fermeture partielle de l'embrayage de pontage (8, 8').

8. Procédé selon l'une quelconque des revendications 2, 4 et 5, **caractérisé en ce que** l'augmentation du régime du moteur est provoquée par une augmentation brève du couple M_{M} du moteur d'entraînement et/ou par une réduction brève du couple M_{TB} transmis par l'élément de démarrage et de freinage hydrodynamique (2, 2') et/ou par une ouverture brève ou une ouverture supplémentaire du frein de turbine (12, 12').

9. Procédé selon l'une quelconque des revendications 3, 6 et 7, **caractérisé en ce que** la réduction du régime du moteur est provoquée par une réduction brève du couple M_{M} du moteur d'entraînement et/ou par une augmentation brève du couple M_{TB} transmis par l'élément de démarrage et de freinage hydrodynamique (2, 2') et, lorsque le frein de turbine (12, 12') est partiellement fermé, en plus par une fermeture brève supplémentaire du frein de turbine (12, 12').
